# EUROPEAN PATENT SPECIFICATION

(11) **EP 3 230 642 B1**
(45) Date of publication and mention of the grant of the patent: **20.11.2019**
(21) Application number: 14815622.7
(22) Date of filing: 10.12.2014
(51) Int. Cl.: F16L 33/24

(54) **CONNECTING ELEMENT FOR ONE OR MORE FLEXIBLE TUBES WITH IMPROVED MOUNTING ARRANGEMENT**
VERBINDUNGSELEMENT FÜR EINEN ODER MEHRERE SCHLÄUCHE MIT VERBESSERTER MONTAGEANORDNUNG
ÉLÉMENT DE RACCORDEMENT POUR AU MOINS UN TUBE FLEXIBLE À AGENCEMENT DE MONTAGE AMÉLIORÉ

(43) Date of publication of application: 18.10.2017
(73) Proprietor: Husqvarna AB, 561 82 Huskvarna (SE)
(72) Inventor: CLAUS, Ralf, 89171 Illerkirchberg (DE); SCHIEDT, Christoph, 88483 Burgrieden (DE)
(74) Representative: Finkele, Rolf
(86) International application number: PCT/EP2014/077164
(87) International publication number: WO 2016/091296

(56) References cited:
- EP-A1- 0 886 096
- GB-A- 2 216 971
- JP-U- S5 571 887
- JP-U- S58 196 493
- US-A- 3 788 676
- US-B1- 6 231 085

## Description

The present invention relates to a connecting element for at least one flexible tube. In particular, the connecting element and the one or more flexible tubes are provided for an irrigation system. Preferably, the irrigation system is provided for an automatic watering of plants. For example, the irrigation system is suitable for domestic applications. Such connecting elements are known from JP 55-71887 U or JP 58-196493 U.

A connecting element for at least one flexible tube of an irrigation system should allow that one or more flexible tubes can be connected and disconnected in an easy and speedy way. Further, the connecting element should be easily operated without any technical manual. Moreover, the connecting element should guarantee a seal connection. Additionally, the connecting element should be weather-resistant. Preferably, the connecting element should comprise an integrative design. In particular, the connecting element should have a low number of components. At last, the connecting element should be realized by low costs.

It is an object of the present invention to provide a connecting element for at least one flexible tube, wherein the connecting element allows an easy and fast connecting of the flexible tube to said connecting element.

The object of the present invention is achieved by the connecting element according to claim 1.

The present invention provides a connecting element for connecting at least one flexible tube, wherein
- the connecting element comprises a main body and in particular also at least one ring sleeve,
- the main body includes a central portion and at least one mandrel extending away from said central portion,
- a duct extends between the mandrels via the central portion or within the mandrel to the central portion, respectively,
- wherein in particular at least one mandrel is enclosed by one ring sleeve, which is rotatable relative to the mandrel between an opened state and a closed state, so that a form fit between the flexible tube and the mandrel is obtained in the closed state,
- the mandrel is inserted or insertable into the flexible tube, in particular while said flexible tube is enclosed or enclosable, respectively, by the corresponding ring sleeve.

According to the invention an inclination is provided in either a front edge arranged at an outer end of at least one mandrel or and/or in at least one sealing edge enclosing circumferentially at least one mandrel or in both edges.

The core of the present invention is the mandrel with the inclined front edge at the outer end of the mandrel or the inclined sealing edge enclosing circumferentially the mandrel. The inclined front or sealing edge of the mandrel allows an easy movement of the flexible tube onto the mandrel by the user. During the movement of the flexible tube onto the mandrel the flexible tube is increasingly centred and the inner wall of the flexible tube is slightly expanded. Thus, the inclined front edge or sealing edge of the mandrel facilitates the movement of the flexible tube on the mandrel by the user.

Preferably, the inclined edge is at least partially enclosed by an outer bevel. Said outer bevel additionally facilitates the movement of the flexible tube on the mandrel by the user.

In particular, the main body with the central portion and the one or more mandrels is formed as a single-piece part. Preferably, an outer end of at least one ring sleeve includes a bevel at its inner side, so that the outer end of the ring sleeve is funnel shaped. The funnel shaped ring sleeve facilitates the insertion of the flexible tube into said ring sleeve. In particular, the cross-section of at least one mandrel is non-circular, in particular elliptic or oval or polygonal, in particular for a form fitting. The ring sleeve includes an internal structure engaged or engageable with the flexible tube encasing the mandrel in the closed state, and/or be rotatable, preferably around a predetermined rotation angle between the opened state and the closed state. The non-circular cross-section of the mandrel allows that the peripheral distances between the ring sleeve and the mandrel are changed during the predetermined rotation between the opened state and closed state.

Further, the ring sleeve may include at least two cutting edges arranged at peripheral opposite sides in the interior of the ring sleeve and extending parallel to the rotating direction of said ring sleeve, wherein preferably the predetermined rotation angle of the ring sleeve relative to the mandrel is about 90 degrees. The opposite cutting edges allow the form fit between the flexible tube and the mandrel in the closed state and an easy removing of the flexible tube from the mandrel in the opened state. Since the predetermined rotation angle of the ring sleeve relative to the mandrel is preferably about 90 degrees, the cutting edges are arrangeable beside the long sides of the non-circular cross-section in the opened state and at the small sides of the non-circular cross-section in the closed state.

Moreover, the mandrel may include at least one sealing edge enclosing circumferentially said mandrel, wherein at least one sealing edge is arranged close to the cutting edges of the ring sleeve. The sealing edge supports the form fit between the flexible tube and the mandrel.

For example, the sealing edge may comprise a triangular cross-section with a first edge angle and a second edge angle, wherein the first edge angle is closer to the open end of the mandrel than the second edge angle, and wherein the first edge angle is smaller than the second edge angle. The small first edge angle allows an easy movement of the flexible tube on the mandrel.

According to a preferred embodiment of the present invention, the mandrel includes at least two sealing edges enclosing circumferentially said mandrel, wherein a first sealing edge is closer to the open end of the mandrel than a second sealing edge, and wherein the diameter of the first sealing edge is smaller than the diameter of the second sealing edge. The first sealing edge may be inclined. The inclined sealing edge facilitates the movement of the flexible tube onto the mandrel.

More general, the mandrel may include more than two sealing edges, wherein the diameter of the sealing edges increases with the distance from the open end of the mandrel. Thus, the mandrel may be connected to flexible tubes with different diameters.

Furthermore, the main body or the ring sleeve includes at least one notch extending along the circumferential direction of the mandrel, wherein at least one cam of the ring sleeve or main body, respectively, is guided or guidable within said notch during the ring sleeve is rotated relative to the mandrel. The cam or cams and the notch allow a stable, but rotatable connection between the main body and the ring sleeve.

Additionally, the main body and/or the ring sleeve may include at least one stopper in order to limit the rotation angle of the ring sleeve relative to the mandrel, wherein preferably the stopper is arranged within the notch, and wherein preferably the stopper interacts with the cam of the ring sleeve. The stopper guarantees that the ring sleeve is rotatable within the predetermined angle only.

Preferably, at least one bump is formed in the bottom of the notch, wherein said bump signalise appreciably to the user, when the ring sleeve has reached the opened or closed state, and wherein preferably the at least one bump is arranged between two stoppers.

In particular, the main body and the at least one ring sleeve are interconnected by bonds, wherein said bonds are provided as predetermined breaking points, so that the connecting element forms a single-piece part after its production until a first use, and wherein preferably the connecting element is in the opened state when the main body and the at least one ring sleeve are interconnected by the bonds.

Further, the ring sleeve may include at least one opening in its peripheral wall, so that a part of the mandrel is visible, wherein preferably a section of the at least one sealing edge is visible. Thus, the user can control the position of the flexible tube moved onto the mandrel.

Moreover, at least one ring sleeve includes at least two gripping elements at its peripheral side, wherein preferably the gripping elements are arranged at opposite sides of the ring sleeve.

At last, the main body includes a recess enclosing at least partially the central portion of said main body, wherein preferably the recess is formed by a plurality of ribs including rounded edges.

Novel and inventive feature of the present invention are set forth in the appended claims.

The present invention will be described in further details with reference to the accompanied drawings, in which
- Figure 1: illustrates a schematic side view of a connecting element according to a preferred embodiment of the present invention,
- Figure 2: illustrates a part of a schematic perspective view of the connecting element according to the preferred embodiment of the present invention,
- Figure 3: illustrates a schematic partial sectional side view of the connecting element according to the preferred embodiment of the present invention,
- Figure 4: illustrates a part of a schematic sectional side view of the connecting element according to the preferred embodiment of the present invention,
- Figure 5: illustrates a schematic partial sectional side view of the connecting element and a flexible tube according to the preferred embodiment of the present invention, wherein the connecting element is in an open state,
- Figure 6: illustrates a schematic partial sectional side view of the connecting element and the flexible tube according to the preferred embodiment of the present invention, wherein the connecting element is in a closed state,
- Figure 7: illustrates two schematic sectional front views of the connecting element and the flexible tube according to the preferred embodiment of the present invention in the opened state and in the closed state, respectively,
- Figure 8: illustrates two schematic sectional perspective views of the connecting element according to the preferred embodiment of the present invention in the opened state and in the closed state, respectively,
- Figure 9: illustrates a part of a schematic side view and a corresponding part of a schematic top view of the connecting element according to the preferred embodiment of the present invention,
- Figure 10: illustrates a part of a schematic side view of the connecting element and the flexible tube according to the preferred embodiment of the present invention,
- Figure 11: illustrates a schematic perspective view of the connecting element according to the preferred embodiment of the present invention, and
- Figure 12: illustrates a part of a schematic perspective view of the connecting element according to the preferred embodiment of the present invention.

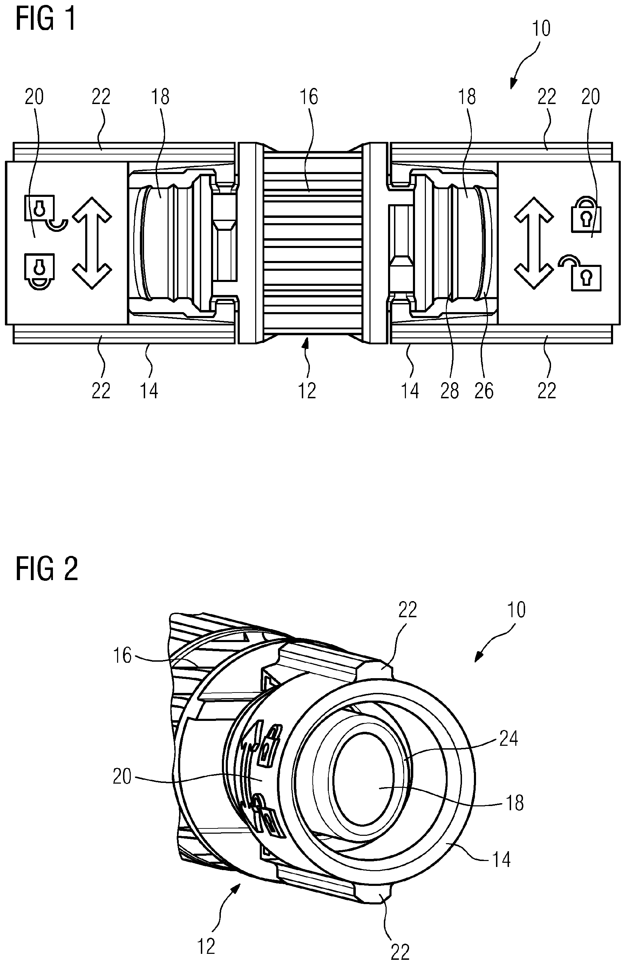

Figure 1 illustrates schematic side view of a connecting element 10 according to a preferred embodiment of the present invention. The connecting element 10 is provided for connecting two flexible tubes 30 with each other.

The connecting element 10 comprises a main body 12 and two ring sleeves 14. The main body 12 is formed as a single-piece part and includes a central portion 16 and two mandrels 18. The mandrels 18 are arranged at two opposing sides of the central portion 16. The mandrels 18 projects from the central portion 16 into two opposite directions. The central portion 16 and the mandrels 18 are hollow, wherein a duct is formed inside the main body 12. The duct extends between the mandrels 18 via the central portion 16. In this example, the duct is substantially linear. Each mandrel 18 forms a pipe socket provided for being encased by one of the flexible tubes. The mandrel 18 is enclosed by one or more sealing edges 26 and 28. The main body 12 with the sealing edges 26 and 28 form a single-piece part.

Each ring sleeve 14 encloses one of the mandrels 18. The ring sleeve 14 is substantially formed as a hollow cylinder. The ring sleeves 14 are rotatable on the mandrel 18 around their symmetry axes between an opened state and a closed state. For example, the mandrel 18 includes on its outer side at least one circumferential notch, in which cams at the inner side of the ring sleeve 14 are guided. Further, the ring sleeve 14 may include at its inner side one or more circumferential notches, in which protrusions on the outer side of the mandrel 18 are guided. In this embodiment, the angle between said opened state and closed state is about 90 degrees. In the closed state the ring sleeve 14 seals the flexible tube encasing the mandrel 18. In the closed state the flexible tube is strongly connected to the connecting element 10. In the opened state the flexible tube can be easily pulled down from the mandrel 18.

In this example, the connecting element 10 comprises the main body 12 with two mandrels 18 and two corresponding ring sleeves 14, so that the connecting element 10 is provided for connecting two flexible tubes. In general, the connecting element 10 comprises a main body 12 with one or more mandrels 18 and the corresponding number of ring sleeves 14, so that the connecting element 10 is provided for connecting the corresponding number of one or more flexible tubes.

Further, each ring sleeve 14 includes a figurative brief instruction 20 indicating the rotating directions in order to obtain the opened and closed state, respectively. Moreover, each ring sleeve 14 includes at least one grip element 22 at its outer circumferential side. In this example, the ring sleeve 14 includes two grip elements 22 arranged at opposite sides. The grip elements 22 facilitate the rotation of the ring sleeve 14 by the user.

Figure 2 illustrates a part of a schematic perspective view of the connecting element 10 according to the preferred embodiment of the present invention. In Figure 2 only one of the ring sleeves 14 is shown.

The connecting element 10 comprises the main body 12 and the two ring sleeves 14, wherein only one of the ring sleeves 14 is shown in Figure 2. The ring sleeve 14 encloses the mandrel 18. The ring sleeve 14 includes the figurative brief instruction 20 indicating the rotating directions for the opened and closed state, respectively. Further, the ring sleeve 14 includes the two grip elements 22 arranged at opposite sides.

In this embodiment, the mandrel 18 includes a non-circular, in particular elliptic or oval or polygonal, cross-section. The non-circular cross-section of the mandrel 18 allows a form fit between the flexible tube and mandrel 18 in combination with a suitable inner structure of the ring sleeve 14 and a suitable outer structure of the mandrel 18.

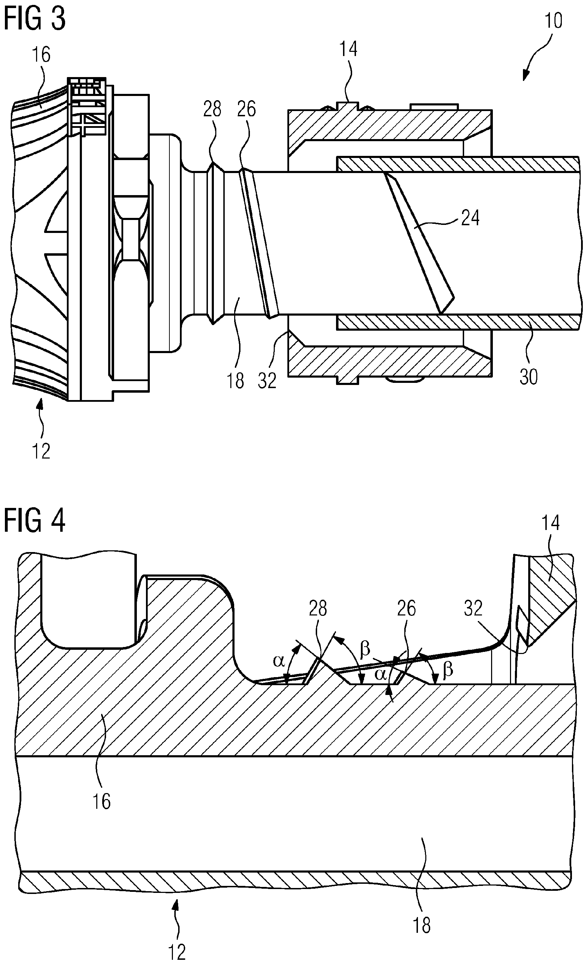

Figure 3 illustrates a schematic partial sectional side view of the connecting element 10 according to the preferred embodiment of the present invention. A side view of the main body 12 and a sectional side view of one of the ring sleeve 14 and flexible tube 30 are illustrated in Figure 3.

The connecting element 10 comprises the main body 12 and the two ring sleeves 14, wherein Figure 3 shows only one of the ring sleeves 14. The ring sleeve 14 encloses the mandrel 18. In Figure 3 the flexible tube 30 partially encases the mandrel 18. In turn, the ring sleeve 14 partially encloses the flexible tube 30.

A front edge 24 of the mandrel 18 is inclined. The inclined front edge 24 of the mandrel 18 allows an easy movement of the flexible tube 30 onto the mandrel 18 by the user. During the movement of the flexible tube 30 onto the mandrel 18 the flexible tube 30 is increasingly centred and the inner wall of the flexible tube 30 is slightly expanded. The inclined front edge 24 of the mandrel 18 facilitates the movement of the flexible tube 30 on the mandrel 18 by the user.

Further, the mandrel 18 includes a first sealing edge 26 and a second sealing edge 28. The first sealing edge 26 and the second sealing edge 28 enclose the mandrel 18 along its peripheral direction. The first sealing edge 26 is closer to the front edge 24 as the second sealing edge 28. Thus, the flexible tube 30 being moved onto the mandrel 18 passes at first the first sealing edge 26 and then the second sealing edge 28. The mandrel 18, the first sealing edge 26 and the second sealing edge 28 form a single-piece part. The first sealing edge 26 and the second sealing edge 28 have a triangular cross-section in each case.

In this example, the first sealing edge 26 is inclined, while the second sealing edge 28 is straight. In a similar way as the inclined front edge 24, the inclined first sealing edge 26 allows also an easy movement of the flexible tube 30 onto the mandrel 18 by the user.

According to the embodiment shown in Figure 3, the front edge 24 as well as the first sealing edge 26 of the mandrel 18 is inclined. According to another embodiment, the front edge 24 of the mandrel 18 is inclined, while the first sealing edge 26 of the mandrel 18 may be straight. According to a further embodiment, the first sealing edge 26 of the mandrel 18 is inclined, while the front edge 24 of the mandrel 18 is straight.

The inclined front edge 24 and/or inclined sealing edge 26 are suitable for the mandrel 18 with the non-circular, in particular elliptic or oval or polygonal, cross-section, but also for a mandrel 18 with another cross-section, for example a circular cross-section.

The ring sleeve 14 includes two cutting edges 32 arranged at opposite sides in the interior of said ring sleeve 14. The cutting edges 32 are aligned parallel to the direction of rotation of the ring sleeve 14.

Figure 4 illustrates a part of a schematic sectional side view of the connecting element 10 according to the preferred embodiment of the present invention. The connecting element 10 comprises the main body 12 and the two ring sleeves 14. In Figure 4 only one of the ring sleeves 14 is partially shown.

The mandrel 18 includes the first sealing edge 26 and the second sealing edge 28. The first sealing edge 26 and the second sealing edge 28 enclose the mandrel 18 along its peripheral direction. The first sealing edge 26 is closer to the front edge 24 as the second sealing edge 28. The mandrel 18, the first sealing edge 26 and the second sealing edge 28 form a single-piece part.

The first sealing edge 26 and the second sealing edge 28 have a triangular cross-section in each case.

The triangular cross-section of the first sealing edge 26 is smaller than the triangular cross-section of the second sealing edge 28. Thus, the diameter of the first sealing edge 26 is smaller than the diameter of the second sealing edge 28. The first sealing edge 26 is provided for sealing flexible tubes 30 having a relative small diameter. The second sealing edge 28 is provided for sealing flexible tubes 30 having a relative big diameter.

A first edge angle α of each sealing edge 26 and 28 is facing the front edge 24 of the mandrel 18. A second edge angle β of each sealing edge 26 and 28 is averted said front edge 24 of the mandrel 18. Preferably, for each sealing edge 26 and 28 the first edge angle α is smaller than the second edge angle β. This allows an easy movement of the flexible tube 30 on the mandrel 18. Preferably, the first edge angle α and the second edge angle β are both smaller than 90 degrees. This also contributes to the easy movement of the flexible tube 30 on the mandrel 18.

In this example, the first sealing edge 26 and the second sealing edge 28 are straight. Alternatively, at least one of the sealing edges 26 and 28, preferably the first sealing edge 26, is inclined. Further, the front edge 24 of the mandrel 18 may be inclined or straight.

The first sealing edge 26 and the second sealing edge 28 in Figure 4 are suitable for the mandrel 18 with the non-circular, in particular elliptic or oval, cross-section, but also for a mandrel 18 with another cross-section, for example a circular cross-section.

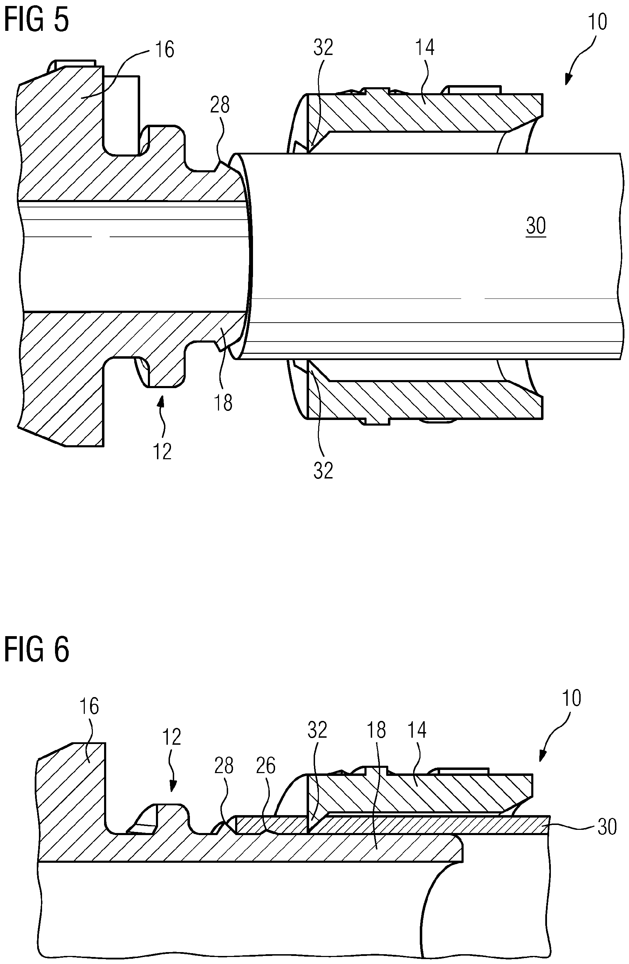

Figure 5 illustrates a schematic partial sectional side view of the connecting element 10 and the flexible tube 30 according to the preferred embodiment of the present invention, wherein the connecting element 10 is in the opened state. In Figure 5 the flexible tube 30 has been moved above the first sealing edge 26.

The diameter of the flexible tube 30 is relative small. The flexible tube 30 is sealed by the first sealing edge 26, while the second sealing edge 28 remains uncovered.

The cutting edges 32 of the ring sleeve 14 are not engaged with the flexible tube 30, since said cutting edges 32 are arranged beside the both long sides of the non-circular cross-section of the flexible tube 30. The non-circular cross-section of the flexible tube 30 results from the non-circular cross-section of the mandrel 18.

Figure 6 illustrates a schematic partial sectional side view of the connecting element 10 and the flexible tube 30 according to the preferred embodiment of the present invention, wherein the connecting element 10 is in the closed state.

Compared to Figure 5 the ring sleeve 14 shown in Figure 6 has been rotated about 90 degrees. Thus, the cutting edges 32 of the ring sleeve 14 are arranged at the both small sides of the non-circular cross-section of the flexible tube 30 and are engaged with said flexible tube 30, wherein the cutting edges 32 are arranged close to the first sealing edge 26. Thereby the form fit between the mandrel 18 and the flexible tube 30 is obtained.

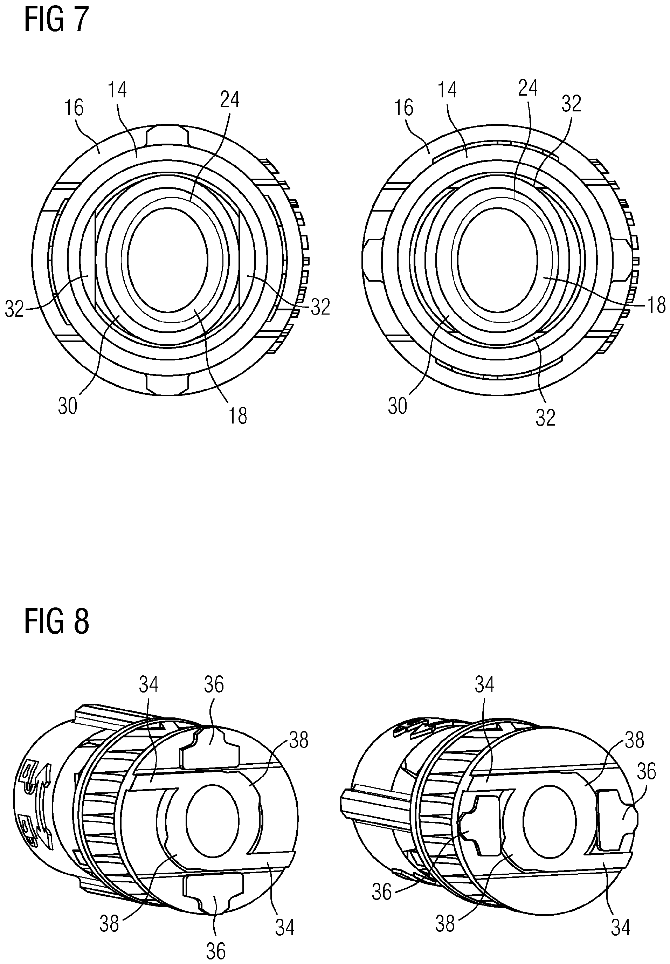

Figure 7 illustrates two schematic sectional front views of the connecting element 10 and the flexible tube 30 according to the preferred embodiment of the present invention in the opened state and in the closed state, respectively. On the left hand side the connecting element 10 is in the opened state, while the right hand side shows the connecting element 10 in the closed state.

The ring sleeve 14 encloses the flexible tube 30. In turn, the flexible tube 30 encases the mandrel 18 of the main body 12. The mandrel 18 has the non-circular, in particular elliptic or oval or polygonal, cross-section. Thus, also the flexible tube 30 encasing said mandrel 18 has the non-circular cross-section.

The ring sleeve 14 includes the two cutting edges 32 arranged at opposite sides in the interior of said ring sleeve 14. The cutting edges 32 are aligned parallel to the direction of rotation of the ring sleeve 14. In the opened state on the left hand side the cutting edges 32 are arranged beside the long sides of the non-circular cross-section of the flexible tube 30. In the closed state on the right hand side the ring sleeve 14 has been rotated about 90 degrees, wherein the cutting edges 32 are arranged at the small sides of the non-circular cross-section of the flexible tube 30. In the closed state the cutting edges 32 are engaged with the flexible tube 30. Thus, the form fit between the mandrel 18 and the flexible tube 30 is obtained.

Figure 8 illustrates two schematic sectional perspective views of the connecting element 10 according to the preferred embodiment of the present invention in the opened state and in the closed state, respectively. On the left hand side the connecting element 10 is in the opened state. On the right hand side the connecting element 10 in the closed state is shown.

The main body 12 includes two stoppers 34 for each ring sleeve 14. The stoppers are arranged around the non-circular mandrel 18. The stoppers 34 effect that the ring sleeves 14 can only be rotated between the opened state and the closed state. The stoppers 34 prevent over rotation of the ring sleeve 34, wherein the cutting edge 32 would run away from a biting position in the flexible tube 30. The stoppers 34 can acknowledge a user that the desired rotation has been accomplished for proper gripping of the flexible tube 30 by the biting of the cutting edges 32 into the flexible tube 30.

Further, the ring sleeve 14 includes two cams 36. During the rotation of the ring sleeve 14 said cams 36 are moved in a notch of the main body 12. Two bumps 38 are formed in the bottom of said notch. Each bump 38 is arranged between two stoppers 34. The bumps 38 signalise appreciably to the user, when the ring sleeve 14 has reached the opened or closed state.

The stoppers 34 and the bumps 38 are positioned in outer portions and may be formed by a lateral opening of the injection moulding. The main body 12 with the stoppers 34 and the bumps 38 forms a single-piece part.

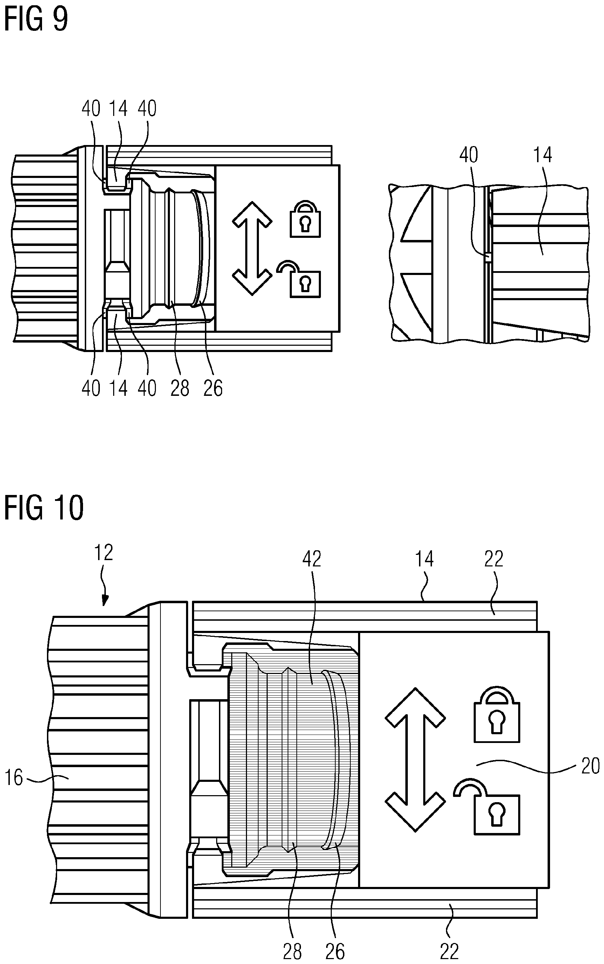

Figure 9 illustrates a part of a schematic side view and a corresponding part of a schematic top view of the connecting element 10 according to the preferred embodiment of the present invention. The schematic side view of the connecting element 10 is on the left hand side, while the schematic top view of said connecting element 10 is on the right hand side.

The connecting element 10 includes at least one bond 40 between the main body 12 and each ring sleeve 14. The bonds 40 are provided as predetermined breaking points. Thus, after production of the connecting element 10, the main body 12 and the at least two ring sleeves 14 form a single-piece part. After the first use of the connecting element 10, the bonds 40 break, so that the main body 12 and the at least two ring sleeves 14 are separate parts. The bonds 40 are very thin. Preferably, the main body 12 and the ring sleeves 14 remain moveably connected, after the bonds have been broken. For example, the cams 36 of the ring sleeve 14 and the notch of the main body 12 remain locked, so that the ring sleeve 14 can be rotated at the main body 12 between the opened and closed state, but not removed from said main body 12.

Preferably, the connecting element 10 is an injection moulded. Thus, the main body 12, the at least two ring sleeves 14 and the bonds 40 between them form a single-piece injection moulded. The arrangement of the connecting element 10 as single-piece part facilitates the production and distribution of said connecting element 10.

In particular, the freshly produced connecting element 10 as single-piece part is in the opened state. Thus, the freshly produced connecting element 10 is in a "ready-to-use"-state. The user can directly insert the flexible tube 30 between the mandrel 18 and the ring sleeve 14. When the user rotates the ring sleeve 14 about 90 degrees relative to the main body 12 into the closed state, then the at least one bond 40 breaks. The schematic side top view of the connecting element 10 on the right hand side clarifies that the bonds are relative small and thin.

Figure 10 illustrates a part of a schematic side view of the connecting element 10 and the flexible tube 30 according to the preferred embodiment of the present invention.

The ring sleeve 14 includes an opening 42. The opening 42 is represented by a shaded area in Figure 10. In this example, the opening 42 is positioned that the first sealing edge 26 and the second sealing edge 28 are partially visible in the absence of the flexible tube 30. In general, the opening 42 forms a viewing window, so that the user can monitor the positioning of the flexible tube 30 on the mandrel 18. The figurative brief instruction 20 is arranged besides the opening 42.

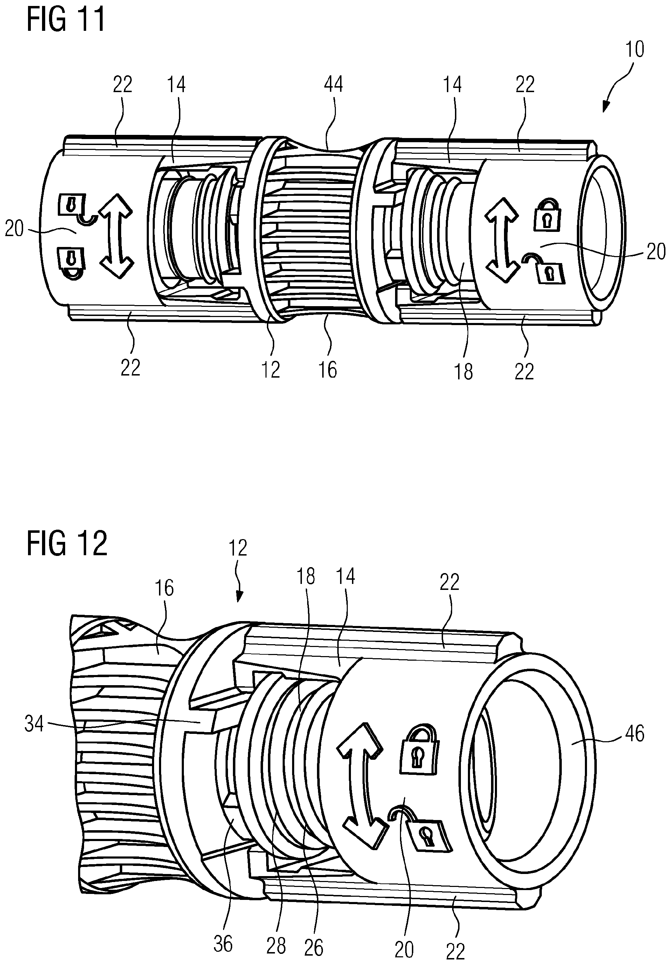

Figure 11 illustrates a schematic perspective view of the connecting element 10 according to the preferred embodiment of the present invention.

The main body 12 of the connecting element 10 includes a recess 44. Said recess 44 encloses peripherally the central portion 16 of the main body 12. The recess 44 allows that the user can certainly hold tight the main body 12 of the connecting element 10, when the flexible tube 30 is moved onto the mandrel 18 and the ring sleeve 14 is rotated relative to said main body 12. The recess 44 is formed by a plurality of ribs. Said ribs include rounded edges. The main body 12 can certainly hold tight by the user without any sharp edges. The grip elements 22 of the ring sleeves 14 allow that the user can certainly hold tight said ring sleeves 14.

Figure 12 illustrates a part of a schematic perspective view of the connecting element 10 according to the preferred embodiment of the present invention.

The ring sleeve 14 includes a bevel 46 at the inner edge of its outer end. The bevel 46 causes that the outer end is funnel shaped. The funnel shaped outer end of the ring sleeve 14 facilitates the insertion of the flexible tube 30 into the ring sleeve 14. Further, the inclined front edge 24 of the mandrel 18 supports that the flexible tube 30 encases the mandrel 18. Although an illustrative embodiment of the present invention has been described herein with reference to the accompanying drawings, it is to be understood that the present invention is not limited to that precise embodiment, and that various other changes and modifications may be effected therein by one skilled in the art without departing from the scope of the invention as defined by the appended claims.

### List of reference numerals

- 10: connecting element
- 12: main body
- 14: ring sleeve
- 16: central portion
- 18: mandrel
- 20: figurative brief instruction
- 22: grip element
- 24: front edge
- 26: first sealing edge
- 28: second sealing edge
- 30: flexible tube
- 32: cutting edge
- 34: stopper
- 36: cam
- 38: bump
- 40: bond
- 42: opening
- 44: recess
- 46: bevel

- α: first edge angle
- β: second edge angle

## Claims

1. Connecting element (10) for connecting at least one flexible tube (30), wherein
- the connecting element (10) comprises a main body (12),
- the main body (12) includes a central portion (16) and at least one mandrel (18) extending away from said central portion (16),
- a duct extends between the mandrels (18) via the central portion (16) or within the mandrel (18) to the central portion (16), respectively,
- the mandrel (18) is insertable into the flexible tube (30),
- wherein a front edge (24) is arranged at an outer end of at least one mandrel (18), wherein the front edge (24) of at least one mandrel (18) is inclined
and/or
- wherein at least one mandrel (18) includes at least one sealing edge (26, 28) enclosing circumferentially said mandrel (18) and wherein the at least one sealing edge (26) is inclined,
**characterized in that**
- the connecting element (10) comprising at least one ring sleeve (14), wherein at least one mandrel (18) is enclosed by one ring sleeve (14) and/or wherein the ring sleeve (14) is rotatable relative to the mandrel (18) between an opened state and a closed state, so that a form fit between the flexible tube (30) and the mandrel (18) is obtained in the closed state and/or wherein the mandrel (18) is insertable into the flexible tube (30), while said flexible tube (30) is enclosable, respectively, by the corresponding ring sleeve (14),
- and that the main body (12) or the ring sleeve (18) includes at least one notch extending along the circumferential direction of the mandrel (18), wherein at least one cam (36) of the ring sleeve (14) or main body (12), respectively, is guided or guidable within said notch during the ring sleeve (14) is rotated relative to the mandrel (18),
- whereby the at least one cam (36) and the notch allow a stable, but rotational connection between the main body (12) and the ring sleeve (14).

2. Connecting element (10) according to claim 1, **characterized in that**
an outer end of at least one ring sleeve (14) includes a bevel (36) at its inner side, so that the outer end of the ring sleeve (14) is funnel shaped, and/or the inclined front edge of at least one mandrel (18) is at least partially enclosed by an outer bevel.

3. Connecting element (10) according to claims 1 or 2, **characterized in that**
the ring sleeve (14) includes an internal structure (32) engaged or engageable with the flexible tube (30) encasing the mandrel (18) in the closed state, and/or **in that** the ring sleeve (14) is rotatable, in particular around a predetermined rotation angle, between the opened state and the closed state, wherein preferably the predetermined rotation angle of the ring sleeve (14) relative to the mandrel (18) is about 90 degrees.

4. Connecting element (10) according to any one of the preceding claims,
**characterized in that**
the ring sleeve (14) includes at least two cutting edges (32) arranged at peripheral opposite sides in the interior of the ring sleeve (14) and extending parallel to the rotating direction of said ring sleeve (14), wherein in particular at least one sealing edge (26, 28) is arranged close to the cutting edges (32) of the ring sleeve (14) and/or
wherein in particular the sealing edge (26, 28) comprises a triangular cross-section with a first edge angle (α) and a second edge angle (β), wherein the first edge angle (α) is closer to the open end (24) of the mandrel (18) than the second edge angle (β), and wherein the first edge angle (α) is smaller than the second edge angle (β).

5. Connecting element (10) according to any one of the preceding claims,
**characterized in that**
the mandrel (18) includes at least two sealing edges (26, 28) enclosing circumferentially said mandrel (18), wherein a first sealing edge (26) is closer to the open end (24) of the mandrel (18) than a second sealing edge (28), and wherein the diameter of the first sealing edge (26) is smaller than the diameter of the second sealing edge (28).

6. Connecting element (10) according to any one of the preceding claims,
**characterized in that**
the main body (12) and/or the ring sleeve (14) includes at least one stopper (34) in order to limit the rotation angle of the ring sleeve (14) relative to the mandrel (18), wherein preferably the stopper (34) is arranged within the notch, and wherein preferably the stopper (34) interacts with the cam (36) of the ring sleeve (14).

7. Connecting element (10) according to claim 6, **characterized in that** at least one bump (38) is formed in the bottom of the notch, wherein said bump (38) signalise appreciably to the user, when the ring sleeve (14) has reached the opened or closed state, and wherein preferably the at least one bump (38) is arranged between two stoppers (34).

8. Connecting element (10) according to any of the preceding claims, **characterized in that**
the main body (12) and the at least one ring sleeve (14) are interconnected by bonds (40), wherein said bonds (40) are provided as predetermined breaking points, so that the connecting element (10) forms a single-piece part after its production until a first use, and wherein preferably the connecting element (10) is in the opened state when the main body (12) and the at least one ring sleeve (14) are interconnected by the bonds (40).

9. Connecting element (10) according to any of the preceding claims, **characterized in that**
the ring sleeve (14) includes at least one opening (42) in its peripheral wall, so that a part of the mandrel (18) is visible, wherein preferably a section of the at least one sealing edge (26, 28) is visible.

10. Connecting element (10) according to any one of the preceding claims,
**characterized in that**
the cross-section of at least one mandrel (18) is non circular, in particular elliptic or oval or polygonal.

11. Connecting element (10) according to any of the preceding claims,
at least one ring sleeve (14) includes at least two gripping elements (22) at its peripheral side, wherein preferably the gripping elements (22) are arranged at opposite sides of the ring sleeve (14).

12. Connecting element (10) according to any one of the preceding claims,
**characterized in that**
the main body (12) includes a recess (34) enclosing at least partially the central portion (16) of said main body, wherein preferably the recess (34) is formed by a plurality of ribs including rounded edges.

## Patentansprüche

1. Verbindungselement (10) zum Verbinden wenigstens eines Schlauchs (30), wobei
- das Verbindungselement (10) einen Hauptkörper (12) umfasst,
- der Hauptkörper (12) einen zentralen Abschnitt (16) und wenigstens einen Dorn (18) einschließt, der sich von dem zentralen Abschnitt (16) weg erstreckt,
- ein Kanal sich zwischen den Dornen (18) über den zentralen Abschnitt (16) beziehungsweise innerhalb des Dorns (18) zu dem zentralen Abschnitt (16) hin erstreckt,
- der Dorn (18) in den Schlauch (30) einführbar ist,
- wobei eine Vorderkante (24) an einem äußeren Ende wenigstens eines Dorns (18) angeordnet ist, wobei die Vorderkante (24) wenigstens eines Dorns (18) geneigt ist und/oder
- wobei wenigstens ein Dorn (18) wenigstens eine Dichtkante (26, 28) einschließt, die den Dorn (18) umlaufend umgibt, und wobei die wenigstens eine Dichtkante (26) geneigt ist,
**dadurch gekennzeichnet, dass**
- das Verbindungselement (10) wenigstens eine Ringhülse (14) umfasst, wobei wenigstens ein Dorn (18) von einer Ringhülse (14) umgeben ist und/oder wobei die Ringhülse (14) relativ zu dem Dorn (18) zwischen einem geöffneten Zustand und einem geschlossenen Zustand drehbar ist, sodass ein Formschluss zwischen dem Schlauch (30) und dem Dorn (18) in dem geschlossenen Zustand erhalten wird und/oder wobei der Dorn (18) in den Schlauch einführbar ist (30), solange der Schlauch (30) jeweils von der entsprechenden Ringhülse (14) umgeben werden kann,
- und dass der Hauptkörper (12) oder die Ringhülse (18) wenigstens eine Kerbe einschließt, die sich entlang der Umfangsrichtung des Dorns (18) erstreckt, wobei wenigstens ein Exzenter (36) der Ringhülse (14) beziehungsweise des Hauptkörpers (12) innerhalb der Kerbe geführt oder führbar ist, während die Ringhülse (14) relativ zu dem Dorn (18) gedreht wird,
- wodurch der wenigstens eine Exzenter (36) und die Kerbe eine stabile, jedoch drehende Verbindung zwischen dem Hauptkörper (12) und der Ringhülse (14) ermöglichen.

2. Verbindungselement (10) nach Anspruch 1, **dadurch gekennzeichnet, dass** ein äußeres Ende wenigstens einer Ringhülse (14) an seiner Innenseite eine Abschrägung (36) einschließt, sodass das äußere Ende der Ringhülse (14) trichterförmig ist und/oder die geneigte Vorderkante wenigstens eines Dorns (18) wenigstens teilweise durch eine äußere Abschrägung umgeben ist.

3. Verbindungselement (10) nach Anspruch 1 oder 2, **dadurch gekennzeichnet, dass** die Ringhülse (14) eine innere Struktur (32) einschließt, die mit dem Schlauch (30) in Eingriff steht oder in Eingriff gebracht werden kann, die den Dorn (18) in dem geschlossenen Zustand umgibt, und/oder dadurch, dass die Ringhülse (14) zwischen dem geöffneten Zustand und dem geschlossenen Zustand, insbesondere um einen vorgegebenen Drehwinkel, drehbar ist, wobei bevorzugt der vorgegebene Drehwinkel der Ringhülse (14) relativ zu dem Dorn (18) etwa 90 Grad beträgt.

4. Verbindungselement (10) nach einem der vorhergehenden Ansprüche, **dadurch gekennzeichnet, dass** die Ringhülse (14) wenigstens zwei Schneidkanten (32) einschließt, die an peripher gegenüberliegenden Seiten in dem Inneren der Ringhülse (14) angeordnet sind und sich parallel zu der Drehrichtung der Ringhülse (14) erstrecken, wobei insbesondere wenigstens eine Dichtkante (26, 28) nahe den Schneidkanten (32) der Ringhülse (14) angeordnet ist und/oder wobei insbesondere die Dichtkante (26, 28) einen dreieckigen Querschnitt mit einem ersten Kantenwinkel (α) und einem zweiten Kantenwinkel (β) umfasst, wobei der erste Kantenwinkel (α) näher an dem offenen Ende (24) des Dorns (18) liegt als der zweite Kantenwinkel (β) und wobei der erste Kantenwinkel (α) kleiner ist als der zweite Kantenwinkel (β).

5. Verbindungselement (10) nach einem der vorhergehenden Ansprüche, **dadurch gekennzeichnet, dass** der Dorn (18) wenigstens zwei Dichtkanten (26, 28) einschließt, die den Dorn (18) umlaufend umgeben, wobei eine erste Dichtkante (26) näher an dem offenen Ende (24) des Dorns (18) liegt als eine zweite Dichtkante (28), und wobei der Durchmesser der ersten Dichtkante (26) kleiner ist als der Durchmesser der zweiten Dichtkante (28).

6. Verbindungselement (10) nach einem der vorhergehenden Ansprüche, **dadurch gekennzeichnet, dass** der Hauptkörper (12) und/oder die Ringhülse (14) wenigstens einen Anschlag (34) einschließt, um den Drehwinkel der Ringhülse (14) relativ zu dem Dorn (18) zu begrenzen, wobei bevorzugt der Anschlag (34) innerhalb der Kerbe angeordnet ist, und wobei bevorzugt der Anschlag (34) mit dem Exzenter (36) der Ringhülse (14) zusammenwirkt.

7. Verbindungselement (10) nach Anspruch 6, **dadurch gekennzeichnet, dass** wenigstens eine Erhebung (38) in dem Boden der Kerbe ausgebildet ist, wobei die Erhebung (38) dem Benutzer spürbar signalisiert, wann die Ringhülse (14) den geöffneten oder den geschlossenen Zustand erreicht hat, und wobei bevorzugt die wenigstens eine Erhebung (38) zwischen zwei Anschlägen (34) angeordnet ist.

8. Verbindungselement (10) nach einem der vorhergehenden Ansprüche, **dadurch gekennzeichnet, dass** der Hauptkörper (12) und die wenigstens eine Ringhülse (14) durch Bindungen (40) miteinander verbunden sind, wobei die Bindungen (40) als Sollbruchstellen bereitgestellt sind, sodass das Verbindungselement (10) nach seiner Herstellung bis zu einem ersten Gebrauch ein einstückiges Teil ausbildet, und wobei bevorzugt das Verbindungselement (10) sich in dem geöffneten Zustand befindet, wenn der Hauptkörper (12) und die wenigstens eine Ringhülse (14) durch die Bindungen (40) miteinander verbunden sind.

9. Verbindungselement (10) nach einem der vorhergehenden Ansprüche, **dadurch gekennzeichnet, dass** die Ringhülse (14) in ihrer peripheren Wand wenigstens eine Öffnung (42) einschließt, sodass ein Teil des Dorns (18) sichtbar ist, wobei bevorzugt ein Bereich der wenigstens einen Dichtkante (26, 28) sichtbar ist.

10. Verbindungselement (10) nach einem der vorhergehenden Ansprüche, **dadurch gekennzeichnet, dass** der Querschnitt wenigstens eines Dorns (18) nicht kreisförmig, insbesondere elliptisch oder oval oder polygonal, ist.

11. Verbindungselement (10) nach einem der vorhergehenden Ansprüche, wobei wenigstens eine Ringhülse (14) wenigstens zwei Greifelemente (22) an ihren peripheren Seiten einschließt, wobei bevorzugt die Greifelemente (22) an gegenüberliegenden Seiten der Ringhülse (14) angeordnet sind.

12. Verbindungselement (10) nach einem der vorhergehenden Ansprüche, **dadurch gekennzeichnet, dass** der Hauptkörper (12) eine Aussparung (34) einschließt, die wenigstens teilweise den zentralen Abschnitt (16) des Hauptkörpers umgibt, wobei bevorzugt die Aussparung (34) durch mehrere Rippen, die abgerundete Kanten einschließen, ausgebildet ist.

## Revendications

1. Élément de raccordement (10) servant à des fins de raccordement d'au moins un tube flexible (30), dans lequel
- l'élément de raccordement (10) comporte un corps principal (12),
- le corps principal (12) comprend une partie centrale (16) et au moins un mandrin (18) s'étendant à l'opposé de ladite partie centrale (16),
- un conduit s'étend entre les mandrins (18) par le biais de la partie centrale (16) ou à l'intérieur du mandrin (18) jusqu'à la partie centrale (16), respectivement,
- le mandrin (18) est en mesure d'être inséré dans le tube flexible (30),
- dans lequel un bord avant (24) est agencé au niveau d'une extrémité extérieure d'au moins un mandrin (18), dans lequel le bord avant (24) d'au moins un mandrin (18) est incliné et/ou
- dans lequel au moins un mandrin (18) comprend au moins un bord d'étanchéité (26, 28) renfermant ledit mandrin (18) de manière circonférentielle et dans lequel ledit au moins un bord d'étanchéité (26) est incliné,
**caractérisé en ce que**
- l'élément de raccordement (10) comporte au moins un manchon annulaire (14), dans lequel au moins un mandrin (18) est renfermé par un manchon annulaire (14) et/ou dans lequel le manchon annulaire (14) est rotatif par rapport au mandrin (18) entre un état ouvert et un état fermé, de telle sorte qu'une complémentarité de forme entre le tube flexible (30) et le mandrin (18) est obtenue dans l'état fermé et/ou dans lequel le mandrin (18) est en mesure d'être inséré dans le tube flexible (30), alors que ledit tube flexible (30) est en mesure d'être renfermé, respectivement, par le manchon annulaire correspondant (14),
- et **en ce que** le corps principal (12) ou le manchon annulaire (18) comprend au moins une entaille s'étendant le long de la direction circonférentielle du mandrin (18), dans lequel au moins une came (36) du manchon annulaire (14) ou du corps principal (12), respectivement, est guidée ou est en mesure d'être guidée à l'intérieur de ladite entaille pendant que le manchon annulaire (14) est tourné par rapport au mandrin (18),
- ce par quoi ladite au moins une came (36) et l'entaille permettent un raccordement stable, mais rotatif entre le corps principal (12) et le manchon annulaire (14).

2. Élément de raccordement (10) selon la revendication 1, **caractérisé en ce que** une extrémité extérieure d'au moins un manchon annulaire (14) comprend un biseau (36) au niveau de son côté intérieur, de telle sorte que l'extrémité extérieure du manchon annulaire (14) a la forme d'un entonnoir, et/ou le bord avant incliné d'au moins un mandrin (18) est renfermé au moins partiellement par un biseau extérieur.

3. Élément de raccordement (10) selon la revendication 1 ou la revendication 2, **caractérisé en ce que** le manchon annulaire (14) comprend une structure interne (32) mise en prise ou en mesure d'être mise en prise avec le tube flexible (30) entourant le mandrin (18) dans l'état fermé, et/ou **en ce que** le manchon annulaire (14) est rotatif, en particulier autour d'un angle de rotation prédéterminé, entre l'état ouvert et l'état fermé, dans lequel de préférence l'angle de rotation prédéterminé du manchon annulaire (14) par rapport au mandrin (18) est d'environ 90 degrés.

4. Élément de raccordement (10) selon l'une quelconque des revendications précédentes, **caractérisé en ce que** le manchon annulaire (14) comprend au moins deux bords de coupe (32) agencés au niveau des côtés opposés périphériques dans la partie intérieure du manchon annulaire (14) et s'étendant de manière parallèle par rapport à la direction de rotation dudit manchon annulaire (14), dans lequel en particulier au moins un bord d'étanchéité (26, 28) est agencé à proximité des bords de coupe (32) du manchon annulaire (14) et/ou dans lequel en particulier le bord d'étanchéité (26, 28) comporte une coupe transversale triangulaire avec un premier angle de bord (a) et un deuxième angle de bord (β), dans lequel le premier angle de bord (a) est plus proche de l'extrémité ouverte (24) du mandrin (18) par rapport au deuxième angle de bord (β), et dans lequel le premier angle de bord (a) est inférieur par rapport au deuxième angle de bord (β).

5. Élément de raccordement (10) selon l'une quelconque des revendications précédentes, **caractérisé en ce que** le mandrin (18) comprend au moins deux bords d'étanchéité (26, 28) renfermant ledit mandrin (18) de manière circonférentielle, dans lequel un premier bord d'étanchéité (26) est plus proche de l'extrémité ouverte (24) du mandrin (18) par rapport à un deuxième bord d'étanchéité (28), et dans lequel le diamètre du premier bord d'étanchéité (26) est inférieur par rapport au diamètre du deuxième bord d'étanchéité (28).

6. Élément de raccordement (10) selon l'une quelconque des revendications précédentes, **caractérisé en ce que** le corps principal (12) et/ou le manchon annulaire (14) comprend au moins une butée (34) afin de limiter l'angle de rotation du manchon annulaire (14) par rapport au mandrin (18), dans lequel de préférence la butée (34) est agencée à l'intérieur de l'entaille, et dans lequel de préférence la butée (34) coopère avec la came (36) du manchon annulaire (14).

7. Élément de raccordement (10) selon la revendication 6, **caractérisé en ce que** au moins un bossage (38) est formé dans le fond de l'entaille, dans lequel ledit bossage (38) signale de manière appréciable à l'utilisateur, le moment où le manchon annulaire (14) a atteint l'état ouvert ou fermé, et dans lequel de préférence ledit au moins un bossage (38) est agencé entre deux butées (34).

8. Élément de raccordement (10) selon l'une quelconque des revendications précédentes, **caractérisé en ce que** le corps principal (12) et ledit au moins un manchon annulaire (14) sont raccordés ensemble par des joints (40), dans lequel lesdits joints (40) sont mis en œuvre comme étant des points de rupture prédéterminés, de telle sorte que l'élément de raccordement (10) forme une pièce en un seul tenant après sa production jusqu'à une première utilisation, et dans lequel de préférence l'élément de raccordement (10) est dans l'état ouvert quand le corps principal (12) et ledit au moins un manchon annulaire (14) sont raccordés ensemble par les joints (40).

9. Élément de raccordement (10) selon l'une quelconque des revendications précédentes, **caractérisé en ce que** le manchon annulaire (14) comprend au moins une ouverture (42) dans sa paroi périphérique, de telle sorte qu'une partie du mandrin (18) est visible, dans lequel de préférence une section dudit au moins un bord d'étanchéité (26, 28) est visible.

10. Élément de raccordement (10) selon l'une quelconque des revendications précédentes, **caractérisé en ce que** la coupe transversale d'au moins un mandrin (18) est non circulaire, en particulier elliptique ou ovale ou polygonale.

11. Élément de raccordement (10) selon l'une quelconque des revendications précédentes, au moins un manchon annulaire (14) comprend au moins deux éléments de saisie (22) au niveau de son côté périphérique, dans lequel de préférence les éléments de saisie (22) sont agencés sur des côtés opposés du manchon annulaire (14).

12. Élément de raccordement (10) selon l'une quelconque des revendications précédentes, **caractérisé en ce que** le corps principal (12) comprend un évidement (34) renfermant au moins partiellement la partie centrale (16) dudit corps principal, dans lequel de préférence l'évidement (34) est formé par une pluralité de nervures comprenant des bords arrondis.
